Europäisches Patentamt

European Patent Office

Office européen des brevets

(19)

(11) Veröffentlichungsnummer: **0 141 016**

**B1**

(12) # EUROPÄISCHE PATENTSCHRIFT

(45) Veröffentlichungstag der Patentschrift:
31.05.89

(21) Anmeldenummer: **84106675.6**

(22) Anmeldetag: **12.06.84**

(51) Int. Cl.⁴: $C\ 08\ J\ 3/00$, $C\ 08\ L\ 67/02$ //
$(C08L67/02, 23:00)$

(54) **Verfahren zur Herstellung von kerbschlagzähen Formmassen auf Basis von Poly(alkylenterephthalaten.**

(30) Priorität: **08.08.83 DE 3328566**

(43) Veröffentlichungstag der Anmeldung:
**15.05.85 Patentblatt 85/20**

(45) Bekanntmachung des Hinweises auf die Patenterteilung:
**31.05.89 Patentblatt 89/22**

(84) Benannte Vertragsstaaten:
**CH DE FR GB IT LI NL**

(56) Entgegenhaltungen:
**FR-A-2 098 316**

(73) Patentinhaber: **HÜLS AKTIENGESELLSCHAFT,
Patentabteilung / PB 15 - Postfach 13 20, D-4370
Marl 1 (DE)**

(72) Erfinder: **Horlbeck, Gernot, Dr., In der Thiebrei 80,
D-4358 Haltern (DE)**
Erfinder: **Bittscheidt, Josef, Schillerstrasse 70,
D-4370 Marl (DE)**

## Beschreibung

Gegenstand der Erfindung ist ein Verfahren zur Herstellung von kerbschlagzähen Formmassen erhalten durch thermische Behandlung von Kunststoffmischungen, die überwiegend Poly(alkylenterephthalat) enthalten, in fester Form - sowie die so erhaltenen Formmassen als solche.

Poly(alkylenterephthalate) sind wertvolle Konstruktionswerkstoffe mit einer Reihe ausgezeichneter Eigenschaften wie hoher Steifigkeit, Oberflächenhärte, Abriebfestigkeit, guter Wärmeformbeständigkeit, Maßhaltigkeit und schneller Verarbeitbarkeit zu komplizierten und großen Formteilen.

Für manche Anwendungsbereiche ist jedoch die Kerbschlagzähigkeit der Poly(alkylenterephthalate) insbesondere bei Temperaturen unterhalb von 20°C ungenügend, so daß die Notwendigkeit besteht, Poly(alkylenterephthalat)-Formmassen mit verbessertem Niveau der Kerbschlagzähigkeit zu entwickeln.

Es existieren bereits zahlreiche Vorschläge, die Kälteschlagzähigkeit von Poly(alkylenterephthalat)-Formmassen durch Einkondensation aliphatischer Dicarbonsäuren oder Diolgemische oder durch Abmischen mit anderen Polymeren wie modifizierten Elastomeren und Polyolefinen zu verbessern.

Allen beschriebenen Maßnahmen haftet jedoch der Mangel an, daß entweder die Zunahme der Kälteschlagzähigkeit nur geringfügig ist oder daß eine deutliche Verbesserung der Kälteschlagzähigkeit mit einer unerwünschten Verschlechterung anderer Eigenschaften, insbesondere der Steifigkeit und Wärmeformbeständigkeit, verbunden ist.

So beschreibt DE-OS-1 694 168 die Verwendung von 0,05 bis 20 Gew.-% - bezogen auf die Gesamtmischung - an Copolymeren aus α-Olefinen und Vinylestern gesättigter aliphatischer Monocarbonsäuren zur Modifizierung von Poly(ethylenterephthalat)-Formmassen.

In den DE-OSS 2 756 698 und 3 040 999 und der US-PS-4 101 502 werden verstärkte Poly(alkylenterephthalat)-Formmassen, die zur Zähigkeitsverbesserung mit Ethylen/Vinylacetat-Copolymeren abgemischt sind, beansprucht.

Schlagzähe Formmassen aus Poly(ethylenterephthalat) bzw. Poly(butylenterephthalat) und Copolymeren aus α-Olefinen und Estern der Acrylsäure werden beispielsweise in DE-OSS 1 694 170 und 2 248 242 beschrieben.

Unbefriedigend bleibt jedoch nach wie vor die geringe kerbschlagverbessernde Wirkung dieser Zusätze in den Abmischungen, so daß hohe Anteile des Modifizierungsmittels erforderlich sind, um eine relativ geringfügige Anhebung des Kerbschlagniveaus zu erreichen. Infolge dessen sind Steifigkeit und Wärmeformbeständigkeit der kerbschlagzäh eingestellten Polyesterformmassen deutlich verschlechtert.

Aufgabe der Erfindung war es, die geschilderten Nachteile des Standes der Technik zu beheben.

Gegenstand der Erfindung ist das in Anspruch 1 dargestellte Verfahren.

Weiterer Gegenstand der Erfindung sind die Formmassen, die nach dem Verfahren gemäß Anpsruch 1 erhalten werden.

Als Poly(alkylenterephthalate) für die Komponente A. kommen Poly(ethylenterephthalat), Poly(propylenterephthalat) und vorzugsweise Poly(butylenterephthalat) in Frage.

Bis zu 20 Mol-%, vorzugsweise 5 bis 15 Mol-%, der Terephthalsäure im Poly(alkylenterephthalat) können durch aromatische, cycloaliphatische oder aliphatische Dicarbonsäuren ersetzt werden. Beispiele geeigneter Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des jeweiligen Alkandiols im Poly(alkylenterephthalat) können durch andere Diole wie beispielsweise Ethylenglykol, Propandiol-(1.3), Hexandiol-(1.6), Neopentylglykol, 1.4-Dimethylolcyclohexan, Dodecandiol-(1.12) o. ä. ersetzt sein.

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Alkandiol in Gegenwart von Katalysatoren hergestellt (Sorensen und Campbell, Preparative Methods of Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, 4, Seiten 1851 bis 1859, 1966).

Das Poly(alkylenterephthalat), welches erfindungsgemäß eingesetzt wird, besitzt eine Viskositätszahl (J) von etwa 55 bis 100 cm³/g, vorzugsweise von 65 bis 95 cm³/g.

Als Komponente B. werden in bezug auf die Komponente A. elastifizierend wirkende α-Olefin-Copolymere eingesetzt. α-Olefine im Sinne der Erfindung sind vorzugsweise Ethylen, Propen oder Buten-1. Ethylen wird insbesondere bevorzugt.

Als Comonomere des α-Olefins kommen einmal Vinylester, zum anderen Methacrylsäure- und Acrylsäureester in Frage.

Als Vinylester werden vornehmlich Vinylacetat oder Vinylpropionat eingesetzt.

Erfindungsgemäße verwendete Methacrylsäure- und Acrylsäureester sind Ester aus Methacrylsäure und aliphatischen Alkoholen mit 1 bis 18 C-Atomen in der Kohlenstoffkette. Bevorzugt wird der Acrylsäurebutylester.

Besonders bevorzugte Copolymere auf α-Olefin/Vinylester-Basis sind solche aus Ethylen und Vinylacetat mit Ethylengehalten von 30 bis 90, vorzugsweise von 45 bis 80 Gew.-%, bezogen auf das Copolymer, und einem mittleren Molgewicht ($\bar{M}_w$) von 10 000 bis 500 000, vorzugsweise 50 000 bis 300 000. - Das Molgewicht ($\bar{M}_w$) wird viskosimetrisch bestimmt.

Die Herstellung dieser Copolymeren erfolgt nach bekannten Verfahren.

Besonders bevorzugte Copolymere auf α-Olefin/Methacrylsäureester-Basis sind solche aus Ethylen und Methacrylsäurebutylester (Butylacrylat) mit Ethylengehalten zwischen 40 und 98, vorzugsweise 55 bis 95 Gew.-%, bezogen auf das Copolymer und einem mittleren Molgewicht ($\bar{M}_w$) von 20 000 bis 250 000, vorzugsweise von 50 000 bis 150 000. - Das Molgewicht ($\bar{M}_w$) wird viskosimetrisch bestimmt.

Die Herstellung dieser Copolymeren erfolgt nach bekannten Verfahren.

Die Copolymeren haben zu 5 bis 30 Gew.-%, vorzugsweise 10 bis 25 Gew.-%, Anteil an der Kunststoffmischung. Der Rest wird durch das Poly(alkylenterephthalat) der Komponente A. gebildet.

Zur Durchführung der thermischen Behandlung der Kunststoffmischungen werden die Komponenten A. und B. miteinander gemischt. Um bei der weiteren Bearbeitung Entmischungserscheinungen zu vermeiden, wird das Gemisch vorzugsweise aufgeschmolzen, homogenisiert und anschließend in die endgültige Bearbeitungsform gebracht, wie z. B. Pellets, Granulate, Pulver etc. Bevorzugt wird dieser Arbeitsgang in einem Extruder bei Temperaturen von ca. 260 bis 280°C durchgeführt. Jedoch kann auch jedes andere bekannte und für den genannten Zweck brauchbare Verfahren angewendet werden.

Die so hergestellte Kunststoffmischung wird etwa 2 bis 12 Stunden, vorzugsweise 4 bis 10 Stunden, bei einer Temperatur, die 15 bis 60°C, vorzugsweise 20 bis 50°C, unterhalb des Schmelzpunktes der jeweiligen reinen Komponente A. liegt, in einer Inertgasatmosphäre und vorzugsweise unter Bewegen der Kunststoffmischung thermisch behandelt. Es kann sowohl bei Normaldruck als auch in einem leichten Vakuum gearbeitet werden. Die Behandlung kann z. B. in einem Taumeltrockner oder Wirbelschichtreaktor durchgeführt werden.

Als Inertgas kommt insbesondere Stickstoff in Frage. Es können aber auch andere Inertgase eingesetzt werden. Es hat sich als vorteilhaft erwiesen, wenn in einem leichten Inertgasstrom gearbeitet wird.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung (Schmelzmischung) als auch in die fertigen, behandelten Formmassen eingearbeitet werden.

Das erfindungsgemäße Verfahren zeichnet sich gegenüber dem Stand der Technik dadurch aus, daß

a) Poly(alkylenterephthalat)-Formmassen schon durch wesentlich geringere α-Olefin-Copolymeren-Zusätze kerbschlagzäh eingestellt werden können und somit hohe Steifigkeit und Wärmeformbeständigkeit neben gutem Zähigkeitsniveau aufweisen, und

b) Poly(alkylenterephthalat)-Formmassen, die mit dem bisher zur Erzielung einer nur mäßigen Kerbschlagverbesserung notwendigen hohen α-Olefin-Copolymeren Anteil modifiziert werden, jetzt eine ausgezeichnete Kerbschlagzähigkeit, insbesondere bei tieferer Temperatur, zeigen.

Der Lösungsweg ist vor allem deswegen für einen Fachmann überraschend, da sowohl die Festphasennachkondensation einer reinen Poly(alkylenterephthalat)-Formmasse als auch das einfache Abmischen derartiger Formmassen mit einer Vielzahl die Kerbschlagzähigkeit verbessernder Polymeren nicht die beabsichtigten Ergebnisse erbracht haben. Ebenso unerwartet ist das erfindungsgemäße Ergebnis auch deswegen, weil die Abmischung aus einem der Festphasennachkondensation unterworfenen Polyester mit einem α-Olefin-Copolymeren keine besondere Wirkung ergibt - eine deutliche Wirkung ergibt sich erst dann, wenn die Kunststoffmischung selbst den erfindungsgemäßen Bedingungen unterworfen wird.

Die in der Beschreibung und in den Beispielen aufgeführten Parameter wurden mittels der nachstehend genannten Meßmethoden bestimmt:

Die <u>Viskositätszahl (J)</u> des Poly(alkylenterephthalats) wurde an Lösungen von 0,23 g Polyester in 100 ml Phenol/sym-Tetrachlorethan (60/40 Gew.-Teile) bei 25°C gemessen.

<u>Kerbschlagzähigkeit</u> gemäß DIN 53 453

<u>Grenzbiegespannung</u> gemäß DIN 53 452

<u>Zug-E-Modul</u> gemäß DIN 53 457/2.1

<u>Wärmeformbeständigkeit</u> gemäß ISO/R 75 (Verfahren A und B)

<u>Schmelzindex (MFI)</u> gemäß DIN 53 735

Die mit Buchstaben gekennzeichneten Beispiele sind nicht erfindungsgemäß.

**Beispiele**

In einem 0,5-m³-Taumeltrockner werden 120 kg der Kunststoffmischung in Form von Granulat (Zusammensetzung s. Tabelle 1) unter den in Tabelle 1 angegebenen Bedingungen thermisch behandelt.

Die charakteristischen Eigenschaften der Formmassen werden in Tabelle 2 und 3 wiedergegeben.

**Tabelle 1**

| Versuch | Kunststoffmischung<br>[Gew.-Teile] | Bedingungen der thermischen Behandlung | | |
|---|---|---|---|---|
| | | Temperatur<br>[°C] | Zeit<br>[h] | N₂-Strom<br>[l/h] |
| 1 | 90 PBTP[1] (J = 90 cm³/g)<br>10 Ethylen/Vinylacetat-Copolymer[2] | 190 | 4 | 70 |

3

| | | | | |
|---|---|---|---|---|
| 2 | 85 PBTP[1]) (J = 90 cm³/g)<br>15 Ethylen/Vinylacetat-Copolymer[2]) | 185 | 5 | 80 |
| 3 | 80 PBTP[1]) (J = 90 cm³/g)<br>20 Ethylen/Butylacrylat-Copolymer[3]) | 195 | 3 | 100 |
| 4 | 90 PBTP[1]) (J = 90 cm³/g)<br>10 Ethylen/Butylacrylat-Copolymer[4]) | 190 | 4 | 80 |
| A | 100 PBTP[1]) (J = 90 cm³/g) | 210 | 4 | 100 |
| B | 100 PBTP[1]) (J = 90 cm³/g) | 190 | 8 | 120 |
| C | 85 PBTP)[1]) (J = 109 cm³/g)<br>15 Ethylen/Vinylacetat-Copolymer[2]) | - | - | - |
| D | 80 PBTP[1]) (J = 117 cm³/g)<br>20 Ethylen/Butylacrylat-Copolymer[3]) | - | - | - |

Erläuterungen zu Tabelle 1
[1]) PBTP: Poly(butylenterephthalat) - Viskositätszahl (J) vor dem Einmischen
[2]) Copolymer aus 55 Gew.-Tl. Ethylen/45 Gew.-Tl. Vinylacetat - MFI (190° C/2,16 kp = 2,8 g/10 Min.)
[3]) Copolymer aus 80 Gew.-Tl. Ethylen/20 Gew.-Tl. Butylacrylat - MFI (190° C/2,16 kp = 1,7 g/10 Min.)
[4]) Copolymer aus 70 Gew.-Tl. Ethylen/30 Gew.-Tl. Butylacrylat - MFI (190° C/2,16 kp = 2,5 g/10 Min.)

**Tabelle 2**

| Versuch | Zug-E-Modul<br>[N/mm²] | Grenzbiegespannung<br>[N/mm²] | Wärmeformbeständigkeit<br>[°C]<br>Verfahren A | Verfahren B |
|---|---|---|---|---|
| 1 | 2 100 | 79 | 65 | 161 |
| 2 | 1 950 | 75 | 61 | 153 |
| 3 | 2 250 | 83 | 66 | 164 |
| 4 | 2 000 | 81 | 63 | 159 |

**Tabelle 3**

| Versuch | Viskositätszahl (J)*) des PBTP-Anteils<br>in der Kunststoffmischung<br>[cm³/g]<br>vor | nach<br>der thermischen Behandlung | Kerbschlagzähigkeit<br><br>[kJ/m²]<br>vor<br>23° C | nach<br>der thermischen Behandlung<br>23° C | -20° C |
|---|---|---|---|---|---|
| 1 | 89 | 103 | 6,5 | 35,2 | 9,7 |
| 2 | 88 | 105 | 9,7 | 50,5 | 11,1 |
| 3 | 88 | 108 | 3,8 | 20,8 | 8,2 |
| 4 | 87 | 106 | 8,6 | 42,2 | 12,3 |
| A | 90 | 105 | 3,5 | 3,7 | 3,5 |
| B | 90 | 112 | 3,5 | 3,8 | 3,5 |
| C | 105**) | -***) | 10,9 | -***) | - |
| D | 111**) | -***) | 4,0 | -***) | - |

*) gemessen an PBTP, welches aus der Kunststoffmischung extrahiert wurde
**) Viskositätszahl der Gesamtmischung
***) keine thermische Behandlung

## EP 0 141 016 B1

**Patentansprüche**

1. Verfahren zur Herstellung von kerbschlagzähen Formmassen erhalten durch thermische Behandlung von Kunststoffmischungen, die überwiegend Poly(alkylenterephthalat) mit einer Viskositätszahl (J) im Bereich von 55 bis 100 cm³/g enthalten, in fester Form,
dadurch gekennzeichnet,
daß die Kunststoffmischung
A. 70 bis 95 Gew.-% Poly(alkylenterephthalat) und
B. 5 bis 30 Gew.-% eines α-Olefin-Copolymeren mit Vinylestern oder (Meth)Acrylsäureestern als Cokomponente
enthält und daß die Kunststoffmischung bei Temperaturen 15 bis 60°C unterhalb des Schmelzpunktes der reinen Komponente A. in einer Inertgasatmosphäre behandelt wird.
2. Kerbschlagzähe Formmassen, hergestellt nach dem Verfahren gemäß Anspruch 1.

**Claims**

1. A process for producing notch-impact-resistant moulding compositions by thermal treatment of plastics mixtures, which predominantly contain poly(alkylen, terephthalate) having a viscosity number (J) in the region of 55 to 100 cm³/g, in solid form, characterised in that the plastics mixture comprises
A) 70 to 95 % by weight of poly(alkylene terephthalate- and
B) 5 to 30 % by weight of an α-olefin copolymer having vinyl esters or methacrylic esters or acrylic esters as co-ingredients,
and in that the plastics mixture, is treated at temperatures 15 to 60°C below the melting point of the pure component A in an inert gas atmosphere.
2. Notch-impact-resistant moulding compositions produced by the process according to claim 1.

**Revendications**

1. Procédé de préparation de masses à mouler résistant à l'entaillage au choc, obtenues par traitement thermique de mélanges de substances synthétiques qui renferment surtout un polytérephtalate d'alkylène présentant un indice de viscosité (J) de 55 à 100 cm³ par gramme, sous forme solide,
caractérisé par le fait que le mélange de substances synthétiques renferme
A. de 70 à 95 % en poids de polytérephtalate d'alkylène et
B. de 5 à 30 % en poids d'un copolymère α-oléfine avec des esters vinyliques ou des esters de l'acide (méth)acrylique en tant que co-composant,
et que le mélange de substances synthétiques est traité à des températures situées de 15 à 60°C au-dessous du point de fusion du composant A à l'état pur, dans une atmosphère gazeuse inerte.
2. Les masses à mouler résistant à l'entaillage au choc, qui sont préparées selon le procédé de la revendication 1.